# FASCICULE DE BREVET EUROPEEN

(11) **EP 2 048 088 B1**
(45) Date de publication et mention de la délivrance du brevet: **27.01.2010**
(21) Numéro de dépôt: 08356127.4
(22) Date de dépôt: 18.09.2008
(51) Int. Cl.: B65D 21/02, B65D 25/24, B65D 81/38, B65D 43/02

(54) **Récipient pour le transport et la conservation des aliments à leur température de consommation**
Behälter für den Transport und die Aufbewahrung von Lebensmitteln bei Verzehrtemperatur
Container for transporting and conserving food at its consumption temperature

(30) Priorité: 12.10.2007 FR 0707159
(43) Date de publication de la demande: 15.04.2009
(73) Titulaire: Etablissements Saint Romain, 42000 Saint Etienne (FR)
(72) Inventeur: Saint Romain, Richard, 42580 l'Etrat (FR); Bayle, Sandrine, 42450 Sury le Comtal (FR); Lergenmuller, Thierry, 42170 Saint Just Saint Rambert (FR)
(74) Mandataire: Perrier, Jean-Pierre

(56) Documents cités:
- DE-A1- 4 412 736
- DE-U1-202006 013 505
- GB-A- 1 024 611

## Description

L'invention concerne un récipient pour le transport et la conservation des aliments à leur température de consommation.

Pour servir à leur température de consommation des aliments déplacés entre une cuisine centralisée et un lieu de consommation éloigné, tel que chambre d'hopital, réfectoire, avec service par chariot, ou salle à manger personnelle avec livraison à domicile, il est connu d'avoir recours à des récipients fermés par un couvercle. Quand la durée d'attente entre le remplissage du récipient et la consommation de l'aliment est longue, le récipient est aussi concçu pour assurer le maintien en température de l'aliment, jusqu'à sa consommation.

Parmi ces derniers, le plus courant est composé d'une peau extérieure obtenue par extrusion gonflage et délimitant entre ses parois une cavité qui, dans une autre opération, est remplie par une matière isolante de type polyuréthane expansé. L'injection du mélange plolyuréthane et agent gonflant est réalisé à un poste comprenant des conformateurs qui contrôlent l'expansion, pendant un temps déterminé. Malgré cela, si les conditions hygrométriques et thermiques d'injection du mélange dans l'ébauche, ne sont pas respectées, l'expansion peut se poursuivre, après et hors des conformateurs, pour former des excroissances déparant le récipient et obligeant de le mettre au rebut.

A cela, il faut ajouter que pour injecter le mélange moussant, il faut prévoir dans la peau du récipient un trou d'injection, et que, en utilisation, ce trou met en contact avec l'extérieur la mousse contenue dans la paroi et permet à des agents pathogènes de s'accumuler dans cette zone, difficilement accessible aux produits habituels de lavage.

Il apparait que ce mode de fabrication est couteux, d'abord par la reprise de fabrication, mais aussi par la part importante de rebuts, qui réduisent le rapport qualité/prix et que, malgré un entretien normal et régulier, il procure desrécipients qui ne respectent pas les règles d'hygiène imposées dans les hopitaux et autres lieux avec une restauration collective.

Un premier objet de l'invention est de fournir un récipient ayant un meilleur rapport qualité/prix, grâce à une fabrication moins onéreuse ne nécessitant pas un contrôle permanent précis de ses conditions thermiques et hygrométriques, générant peu de rebuts, et qui satisfasse aux règles d'hygiène en n'offrant aucune zone de stockage de bactéries ou autres agents pathogènes

Quand on examine, la variation de température de l'aliment dans le récipient, il apparait que les phases qui dissipent le plus les calories, sont celles consistant à:
- déverser l'aliment très chaud dans la cavité du récipient, alors à température ambiante,
- poser ce récipient sur un support quelconque pour assurer son maintien, pendant le transport, avant ouverture, ou pendant la consommation,
- ouvrir ce récipient pour accéder à son contenu,
- et à consommer son contenu.

C'est donc hors de ces phases, spécifiques et incontournables, que sont utilisées les grandes qualités d'isolation thermique procurées par le complexe peaux-mousse. Il apparait ainis que ce complexe, conçu pour une longue durée de conservation, n'est en pratique utile que pendant une durée de l'ordre de 1 à 2 heures et que l'apport de ses qualités est peu perceptible.

Un autre objet de l'invention est de fournir une isolation suffisante pour limiter les déperditions calorifiques hors des phase cruciales, mais avec des moyens plus faciles à fabriquer.

Un autre inconvénient inhérent à ce type de récipient est le manque d'étanchéité de la fermeture par le couvercle. En effet, sous les cahos du transport; il n'est pas rare que de l'aliment s'échappe du récipient, à travers une fente formée entre couvercle et récipient, et salisse le récipient, ceux qui l'entourent et le plancher du véhicule. Indépendamment des conséquences sur l'hygiène générale du service de portage des repas et les contraintes de nettoyage, ce défaut met en évidence la possibilité d'échanges avec l'extérieur, l'accélération des déperditions calorifiques et la baisse de température de l'aliment.

Un autre objet de l'invention est de fournir un ensemble récipient avec couvercle dont la fermeture et l'étanchéité soient permanentes et ne puissent être modifiées que par une intervention humaine.

Elle concerne plus particulièrement un récipient composé d'un réceptacle creux et d'un couvercle d'obturation de sa cavité.

Selon l'invention le réceptacle et son couvercle sont chacun réalisés monolithiquement par moulage dans un matériau thermoplastique expansé et comprennent localement, respectivement, sous le fond du récipient et contre la face inférieure du couvercle, une couche surmoulée en matériau viscoélastique, formant barrière thermique et, respectivement, sous le fond du récipient, semelle anti glissement et, sous le couvercle, joint d'étanchéité, tandis que le couvercle présente, de moulage, au moins deux pattes radiales dont les extrémités sont aptes à pénétrer dans les encoches de deux ailettes saillant radialement à l'extérieur du récipient, pour assurer le verrouillage du couvercle sur ce dernier.

Grace à cet aménagement, la fabrication du récipient est plus rapide, moins onéreuse et sans aucun rebut, puisque l'expansion du matériau constituant ses composants s'effectue dans l'empreinte d'un moule massif, sans risque de réaction avec une peau extérieure et dans des conditions insensibles aux variations thermiques et hygrométriques du local de fabrication. Il en est de même pour le surmoulage des couches en matériau viscoélastique.

Ces couches augmentent l'isolation de chacun des composants et ajoutent des fonctions spécifiques, à savoir, joint pour le couvercle et élément antiglissement pour le réceptacle.

La fabrication procure des surfaces extérieures lisses et sans trous d'injection pouvant, dans le temps, altérer l'hygiène.

Enfin, les moyens de verrouillage du couvercle sur le réceptacle font corps avec les composants qui les portent et n'imposent donc aucune dépense en fourniture extérieure. Leur structure est simple, facile à mettre en situation de verrouillage et garantit l'étanchéité, en évitant toute déperdition calorifique entre couvercle et réceptacle.

Dans une forme d'exécution de l'invention, la couche surmoulée sous le couvercle présente un bourrelet périphérique formant joint d'étanchéité en venant en appui contre une portée tronconique ménagée dans la cavité du réceptacle.

Cela améliore l'étanchéité en limitant le contact du couvercle sur le réceptacle à une génératrice du bourrelet.

Avantageusement, chacune des pattes du couvercle présente, à son extrémité inférieure, un retour coudé saillant vers l'extérieur et apte à s'insérer sous l'une des ailettes du réceptacle, pour assurer le placage élastique du joint contre la portée du réceptacle.

Ainsi, le verrouillage du couvercle sur le réceptacle augmente le placage du joint et garantit l'absence ultérieure de toute fuite d'aliment et de tout échange thermique avec l'extérieur.

Cet aménagement est particulièrement intérressant pour le service individuel pratiqué à partir d'un chariot portant une réserve d'aliment ou de boisson fractionnée pour chaque consommateur, car après remplissage du récipient, qu'il s'agisse d'un bol, d'une assiette ou d'une tasse, puis fermeture par le couvercle, l'aliment ou la boisson contenue et stockée peut être conservée de 1 à 2 heures sans grande déperdition calorifique. Cela permet au personnel de procéder au service, que le consommateur soit présent ou absent, pour raison personnelle ou médicale, et au consommateur de cmmencer à consommer l'aliment ou la boisson quand il est disponible ou quand il en a envie, sans que ce décalage, entre service et enlèvement du couvercle, soit une cause d'abaissement de la température de consommation.

D'autre caractéristiques et avantages ressortiront de la description qui suit, en référence au dessin schématique annexé, représentant une forme d'exécution de l'invention dans le cas de son application à un récipient en forme de bol.
Figures 1 et 2 sont des vues en perspective, respectivement, du couvercle et du réceptacle ;
Figures 3 et 4 sont des vues en coupe transversale, respectivement, du couvercle et du réceptacle ;
Figure 5 est une vue en coupe transversale du récipient, dans un plan passant par les ailettes du réceptacle ;
Figures 6 et 7 sont des vues de cotés en coupe partielle et à échelle réduite, montrant, respectivement, l'empilage de deux réceptacles et l'empilage de deux récipients fermés.
   Dans ce dessin, la référence numérique 2 désigne le réceptacle et celle 3 le couvercle. Ces deux éléments sont obtenus par moulage d'une matière synthétique thermoplastique et plus précisément de polypropylène contenant un agent gonflant formant, après expansion, des cellules fermées réparties dans la matière solide et améliorant ses capacités d'isolement thermique. Sur chacun de ces éléments est ensuite surmoulée une couche, respectivement, 4 sous le fond du réceptacle 2 et 5 contre la face du couvercle 3 qui est destinée à venir contre le réceptacle. Cette couche est en matériau viscoélastique et, par exemple, en polypropylène souple ayant une dureté shore de 45.
   Le réceptacle 2 décrit dans cette forme d'exécution est un bol dont la cavité interne 2a est de forme générale tronconique et présente localement un épaulement 6 et une portée tronconique d'entrée 7, dont l'utilité sera précisée plus loin. La forme extérieure est également de forme générale tronconique, mais de plus faible conicité pour donner à l'épaisseur du réceptacle une valeur allant en décroissant vers le haut.

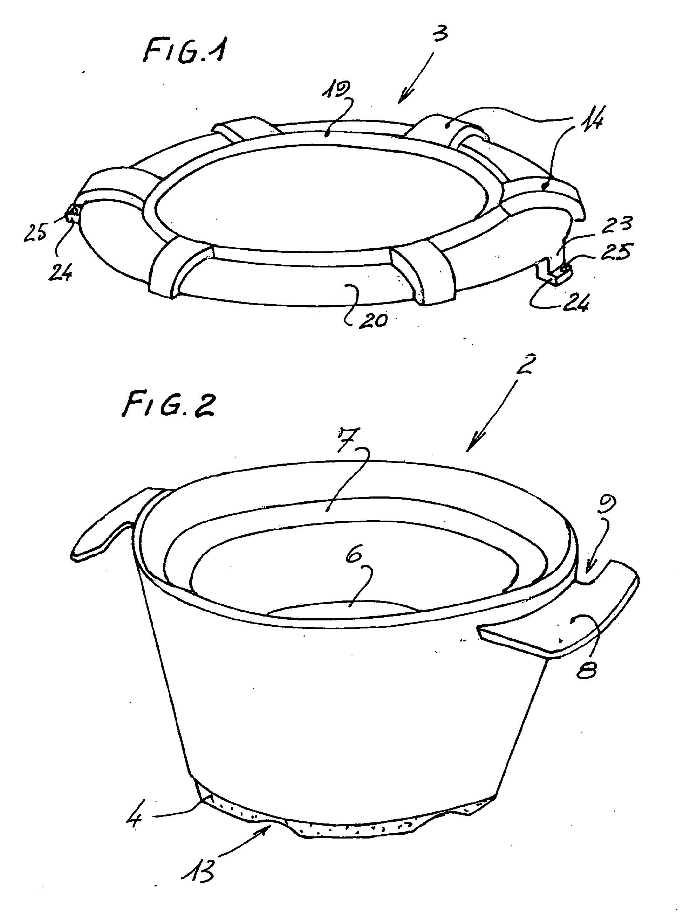

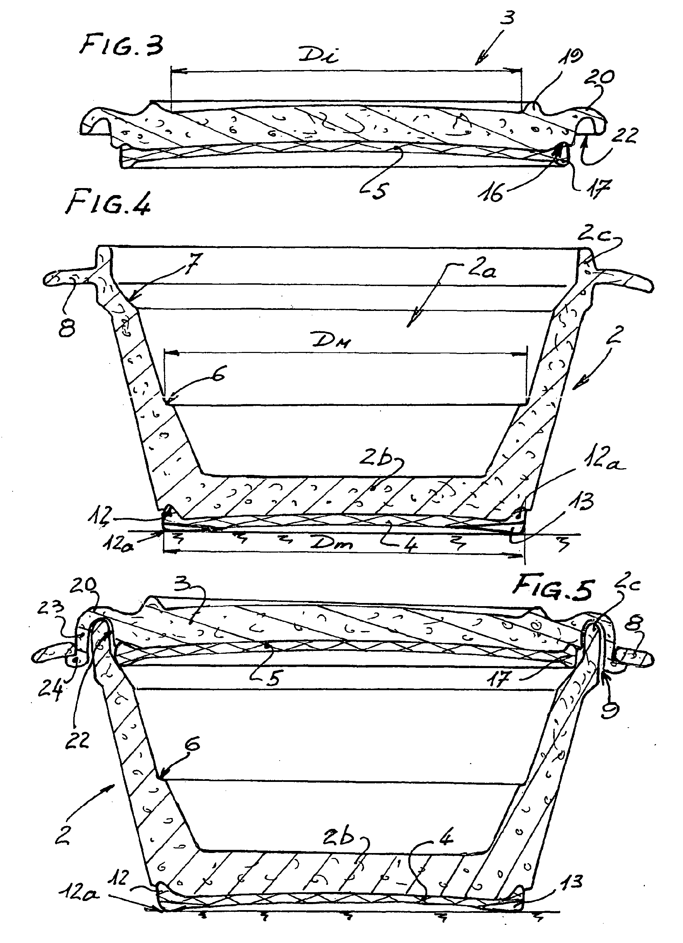

   Les figures 2 et 4 montrent que le réceptacle présente, près de son bord supérieur, deux ailettes 8, diamétralement opposées et pourvues chacune d'une encoche 9.
   Le fond 2b du réceptacle est ceinturé par une gorge périphérique 10 servant à la retenue d'un bourrelet 12, formé sur le bord de la couche surmoulée 4. Cette couche 4 est concave de manière que l'appui du réceptacle sur un support plan s'effectue par l'arrête inférieure 12a du bourrelet 12.
   Enfin, de la face inférieure de la couche 4, débouchent vers le bas et latéralement des rainures 13 ou logements en creux, logements dont la forme et la répartition sont identiques à celles de bossage 14 saillant, comme montré à la figure 1, de la face supérieure du couvercle 3.
   La structure d'appui du réceptacle sur un support comprend donc diverses arêtes qui, formées comme celle 12a mais aussi par les bords des rainures 13, s'ajoutent au caractère « accrocheur » du matériau viscoélastique constituant le couche 4 pour améliorer la tenue du récipient et l'empêcher de glisser sur une surface plane et lisse..

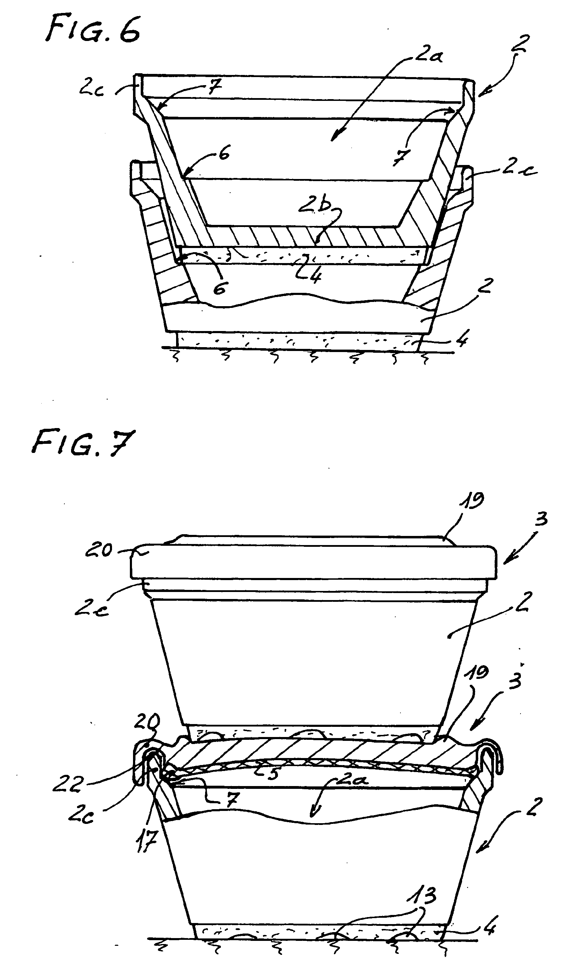

   La figure 4 montre que la plus grande dimension DM de l'épaulement 6 du réceptacle a un valeur au moins égale à la valeur de la dimension diamétrale extérieure Dm du bourrelet 12, de manière à assurer le positionnement du réceptacle introduit dans la cavité 2a, comme montré à la figure 6, et assurer la stabilité de la pile formée par superposition de réceptacles vides, en attente de remplissage ou de lavage.
   La base du couvercle 3 est aussi ceinturée par une gorge 16 qui améliore l'ancrage de la couche surmoulée 5 et en particulier d'un bourrelet périphérique 17 formant joint d'étanchéité et destiné à venir en appui sur la portée 7 du réceptacle. La couche 5 est également concave, afin que ce soit le seul bourrelet 17 qui puisse venir en contact avec la portée 7 ou avec une surface d'appui plane.
   La figure 1 montre que le couvercle présente, en saillie de sa face supérieure et en complément des bossages 14, une nervure circulaire 19 dont la dimension intérieure Di est au moins égale à la dimension Dm du réceptacle. Ainsi quand un récipient est empilé sur un autre récipient et comme le montre la figure 7, la nervure 19 assure le positionnement du fond du récipient superposé et améliore la stabilité de la pile ainsi formée.
   Cet aménagement permet, lors du transport des récipients, de former des piles très stables de plusieurs récipients superposés. Cela limite et voire même supprime toutes les chutes de récipients entrainant le brassage des aliments contenus par chaque récipient et la détérioration de l'aspect de ces aliments après enlèvement du couvercle.
   La figure 3 montre que la périphérie du couvercle 3 est formée par un retour arrondi 20 délimitant une gorge 22 apte à coiffer le bord supérieur 2c du réceptacle 2.
   Enfin les figures 1 et 5 montrent que le couvercle 3 présente au moins deux pattes opposées 23 munies, chacune et à leur extrémité inférieure d'un retour 24 coudé vers l'extérieur.
   Quand le couvercle est mis en place sur le récipient, il est positionné de manière que ses pattes soient éloignées des ailettes 8 du réceptacle, puis il est pivoté par rapport à ce réceptacle, afin que les pattes 23 s'engagent dans les encoches 9 des ailettes et que les retours coudés 24 viennent au dessous de ces ailettes, comme montré à la figure 5. L'appui des retours 24 sous les ailettes 8 génèrent un effort vertical tirant le couvercle 3 vers le bord supérieur du réceptacle 2, et assurant le placage du bourrelet joint d'étanchéité 17 contre la portée 7 du réceptacle.
   L'effort de serrage du joint 17 peut être amélioré par une forme hélicoïdale donnée aux ailettes et/ou par une excroissance 25 qui, aménagée sur chaque retour 24 comme montré à la figure 1, vient en contact sous l'ailette 8, en fin d'engagement de la patte 23 dans l'encoche 9.
   Il ressort de ce qui précède que la fabrication du récipient utilise des techniques connues, peu couteuses, ne présentant pas de résultats aléatoires en fonction de l'ambiance du lieu de fabrication, et que les récipients obtenus procurent, par leur structure expansée, une isolation qui limite les pertes calorifiques entre le remplissage du récipient et son ouverture, sur une durée comprise entre 1 et 4 heures.
   Par ailleurs, la fermeture verrouillée du récipient supprime les risques de pertes d'aliment et de calories par échappement entre couvercle et réceptacle, et supprime la nécessité de nettoyer les récipients et l'équipement servant au transfert entre le lieu de préparation des aliments et le lieu de consommation. De la sorte, si lors de son déversement dans la cavité du réceptacle, la température donnée à l'aliment prend en compte la déperdition de calories par transfert aux composants du récipient, lors de ce déversement et lors du transport, le dit aliment est pratiquement à la température de consommation quand le couvercle est déverrouillé et enlevé.
   Enfin, pendant la consommation de l'aliment, la structure données au fond du réceptacle empêche celui-ci de glisser sur la surface le supportant et s'oppose au salissement de cette dernière par des déversements accidentels.
   Dans une forme d'exécution, la matière constitutive du réceptacle et du couvercle contient des pigments thermochromiques donnant à ces composants une coloration dépendant de leur température et informant le consommateur de la température de l'aliment avant d'ouvrir le récipient.
   L'invention qui vient d'être décrite dans le cas de son application à un bol peut bien entendu s'appliquer, sans sortir du cadre de l'invention, à tout autre récipient, tel qu'assiette creuse, pour la soupe ou un dessert, coupelle pour entrée, broc ou théière, et tasse isotherme.

## Revendications

1. Récipient pour le transport et la conservation des aliments à leur température de consommation, composé d'un réceptacle creux (2) et d'un couvercle (3) d'obturation de sa cavité (2a), dans lequel le réceptacle (2) et son couvercle (3) sont chacun réalisés monolithiquement par moulage dans un matériau thermoplastique expansé et comprennent localement, respectivement, sous le fond (2b) du récipient (2) et contre la face inférieure du couvercle (3), une couche surmoulée (4, 5) en matériau viscoélastique, formant barrière thermique et, respectivement, sous le fond du récipient (2), semelle anti glissement et, sous le couvercle (3), joint d'étanchéité, tandis que le couvercle (3) présente, de moulage, au moins deux pattes radiales (23) dont les extrémités sont aptes à pénétrer dans des encoches (9) de deux ailettes (8) saillant radialement à l'extérieur du récipient, pour assurer le verrouillage du couvercle sur ce dernier.

2. Récipient pour le transport et la conservation des aliments à leur température de consommation, selon la revendication 1 **caractérisé en ce que** le matériau constitutif du récipient (2,3) est un polypropylène contenant un agent gonflant, tandis que le matériau de la couche (4,5) surmoulée sur le réceptacle (2) et sur le couvercle (3) est un polypropylène souple.

3. Récipient pour le transport et la conservation des aliments à leur température dé consommation, selon la revendication 1 **caractérisé en ce que** la couche (4) surmoulée sous le réceptacle (2) présente des rainures, ou zones en creux (13), de formes et répartition identiques à celles de bossages (14) saillant de la face supérieure du couvercle (3).

4. Récipient pour le transport et la conservation des aliments à leur température de consommation, selon la revendication 1 **caractérisé en ce que** la couche (5) surmoulée sous le couvercle (3) présente un bourrelet périphérique (17) formant joint d'étanchéité en venant en appui contre une portée tronconique (7) ménagée dans la cavité (2a) du réceptacle (2).

5. Récipient pour le transport et la conservation des aliments à leur température de consommation, selon les revendications 1 et 4 prise ensemble **caractérisé en ce que** chacune des pattes (23) du couvercle(3) présente, à son extrémité inférieure, un retour coudé (24) saillant vers l'extérieur et apte à s'insérer sous l'une des ailettes (8) du réceptacle, pour assurer le placage élastique du joint (17) contre la portée (7) du réceptacle (2).

6. Récipient pour le transport et la conservation des aliments à leur température de consommation, selon la revendication 1 **caractérisé en ce que** le réceptacle (2) comporte dans sa cavité interne (2a) de forme générale tronconique un épaulement (6) de positionnement du fond d'un autre réceptacle (2).

7. Récipient pour le transport et la conservation des aliments à leur température de consommation, selon la revendication 1 **caractérisé en ce que** le couvercle (3) présente, en saillie de sa face supérieure, une nervure circulaire (19) de positionnement du fond du réceptacle (2) empilé sur lui.

8. Récipient pour le transport et la conservation des aliments à leur température de consommation, selon la revendication 1 **caractérisé en ce que** la couche (4) surmoulée sous le récipient est concave afin que ce soit son bord périphérique qui vienne en contact avec un support plan.

9. Récipient pour le transport et la conservation des aliments à leur température de consommation, selon la revendication 1 **caractérisé en ce que**, la matière constitutive du réceptacle (2) et du couvercle (3) contient des pigments thermochromiques donnant à ces composants une coloration dépendant de leur température.

## Claims

1. Container for the transport and conservation of foodstuffs at their consumption temperature, consisting of a hollow receptacle (2) and a lid (3) for closing off its cavity (2a) in which the receptacle (2) and its lid (3) are each made monolithically by moulding in an expanded thermoplastic material and comprise locally, respectively, under the bottom (2b) of the container (2) and against the lower face of the lid (3) an overmoulded layer (4, 5) in viscoelastic material, forming a thermal barrier and, respectively, under the bottom of the container (2), a non-slip sole and, under the lid (3), a seal, while the lid (3) has, in moulding, at least two radial lugs (23) the ends of which are capable of entering notches (9) of two wings (8) protruding radially to the outside of the container, in order to lock the lid onto the latter.

2. Container for the transport and conservation of foodstuffs at their consumption temperature according to Claim 1, **characterized in that** the material forming the container (2, 3) is a polypropylene containing a swelling agent, while the material of the layer (4, 5) overmoulded onto the receptacle (2) and onto the lid (3) is a flexible polypropylene.

3. Container for the transport and conservation of foodstuffs at their consumption temperature according to Claim 1, **characterized in that** the layer (4) overmoulded under the receptacle (2) has grooves, or recessed zones (13), with shapes and distribution identical to those of bosses (14) protruding from the upper face of the lid (3).

4. Container for the transport and conservation of foodstuffs at their consumption temperature according to Claim 1, **characterized in that** the layer (5) overmoulded beneath the lid (3) has a peripheral swelling (17) forming a seal and resting against a frustoconical bearing surface (7) made in the cavity (2a) of the receptacle (2).

5. Container for the transport and conservation of foodstuffs at their consumption temperature according to Claims 1 and 4 taken together, **characterized in that** each of the lugs (23) of the lid (3) has, at its lower end, a bent return (24) protruding outwards and capable of being inserted under one of the wings (8) of the receptacle in order to provide the elastic placement of the seal (17) against the bearing surface (7) of the receptacle (2).

6. Container for the transport and conservation of foodstuffs at their consumption temperature according to Claim 1, **characterized in that** the receptacle (2) comprises, in its inner cavity (2a) of generally frustoconical shape, a shoulder (6) for positioning the bottom of another receptacle (2).

7. Container for the transport and conservation of foodstuffs at their consumption temperature according to Claim 1, **characterized in that** the lid (3) has, protruding from its upper face, a circular rib (19) for positioning the bottom of the receptacle (2) stacked on top of it.

8. Container for the transport and conservation of foodstuffs at their consumption temperature according to Claim 1, **characterized in that** the layer (4) overmoulded under the container is concave so that it is its peripheral edge which comes into contact with a flat support.

9. Container for the transport and conservation of foodstuffs at their consumption temperature according to Claim 1, **characterized in that** the material forming the receptacle (2) and the lid (3) contains thermochromic pigments giving these components a coloration dependent on their temperature.

## Patentansprüche

1. Behälter für den Transport und die Aufbewahrung von Nahrungsmitteln bei ihrer Verzehrtemperatur, der aus einem hohlen Gefäß (2) und einem Deckel (3) zum Verschließen seines Hohlraums (2a) besteht, wobei das Gefäß (2) und sein Deckel (3) je monolithisch durch Formen aus einem geschäumten thermoplastischen Werkstoff hergestellt werden und lokal unter dem Boden (2b) des Behälters (2) und gegen die Unterseite des Deckels (3) eine aufgeformte Schicht (4, 5) aus einem viskoelastischen Material enthalten, das eine Wärmesperre und unter dem Boden des Behälters (2) eine Gleitschutzsohle bzw. unter dem Deckel (3) eine Dichtung formt, während der Deckel (3) mindestens zwei angeformte radiale Laschen (23) aufweist, deren Enden in Kerben (9) von zwei Flügeln (8) eindringen können, die radial aus dem Behälter nach außen vorstehen, um die Verriegelung des Deckels auf diesem letzteren zu gewährleisten.

2. Behälter für den Transport und die Aufbewahrung von Nahrungsmitteln bei ihrer Verzehrtemperatur nach Anspruch 1, **dadurch gekennzeichnet, dass** das den Behälter (2, 3) bildende Material ein ein Quellmittel enthaltendes Polypropylen ist, während das Material der auf das Gefäß (2) und den Deckel (3) aufgeformten Schicht (4, 5) ein weiches Polypropylen ist.

3. Behälter für den Transport und die Aufbewahrung von Nahrungsmitteln bei ihrer Verzehrtemperatur nach Anspruch 1, **dadurch gekennzeichnet, dass** die unter das Gefäß (2) aufgeformte Schicht (4) Rillen oder vertiefte Zonen (13) aufweist, deren Formen und Verteilung gleich denjenigen von Wölbungen (14) sind, die von der Oberseite des Deckels (3) vorstehen.

4. Behälter für den Transport und die Aufbewahrung von Nahrungsmitteln bei ihrer Verzehrtemperatur nach Anspruch 1, **dadurch gekennzeichnet, dass** die unter den Deckel (3) aufgeformte Schicht (5) einen Umfangswulst (17) aufweist, der eine Dichtung bildet, indem er gegen eine im Hohlraum (2a) des Gefäßes (2) vorgesehene kegelförmige Lagerfläche (7) in Auflage kommt.

5. Behälter für den Transport und die Aufbewahrung von Nahrungsmitteln bei ihrer Verzehrtemperatur nach den Ansprüchen 1 und 4 zusammengenommen, **dadurch gekennzeichnet, dass** jede der Laschen (23) des Deckels (3) an ihrem unteren Ende einen gekrümmten Rücklauf (24) aufweist, der nach außen vorsteht und sich unter einen der Flügel (8) des Gefäßes einfügen kann, um das elastische Anlegen der Dichtung (17) gegen die Lagerfläche (7) des Gefäßes (2) zu gewährleisten.

6. Behälter für den Transport und die Aufbewahrung von Nahrungsmitteln bei ihrer Verzehrtemperatur nach Anspruch 1, **dadurch gekennzeichnet, dass** das Gefäß (2) in seinem inneren Hohlraum (2a) von allgemeiner Kegelform eine Schulter (6) zur Positionierung des Bodens eines anderen Gefäßes (2) aufweist.

7. Behälter für den Transport und die Aufbewahrung von Nahrungsmitteln bei ihrer Verzehrtemperatur nach Anspruch 1, **dadurch gekennzeichnet, dass** der Deckel (3) auf seiner Oberseite vorstehend eine Kreisrippe (19) zur Positionierung des Bodens des auf ihn gestapelten Gefäßes (2) aufweist.

8. Behälter für den Transport und die Aufbewahrung von Nahrungsmitteln bei ihrer Verzehrtemperatur nach Anspruch 1, **dadurch gekennzeichnet, dass** die unter dem Behälter aufgeformte Schicht (4) konkav ist, damit es ihr Umfangsrand ist, der mit einem ebenen Träger in Kontakt kommt.

9. Behälter für den Transport und die Aufbewahrung von Nahrungsmitteln bei ihrer Verzehrtemperatur nach Anspruch 1, **dadurch gekennzeichnet, dass** das das Gefäß (2) und den Deckel (3) bildende Material thermochrome Pigmente enthält, die diesen Bauteilen eine von ihrer Temperatur abhängige Färbung verleihen.
